# EUROPEAN PATENT APPLICATION

(11) **EP 4 509 899 A1**
(43) Date of publication of application: **19.02.2025**
(21) Application number: 22936881.6
(22) Date of filing: 14.04.2022
(51) Int. Cl.: G02B 26/00, G02F 1/17, G02F 1/19, C08G 77/38, C09D 183/04, C09D 183/08, C09J 7/30

(54) **LIGHT VALVE AND SWITCHABLE GLASS**

(71) Applicant: Zhejiang Jingyi New Material Technology Co. Ltd, Taizhou, Zhejiang 318020 (CN)
(72) Inventor: ZHANG, Dawei, Taizhou, Zhejiang 318020 (CN); ZHANG, Yuzhe, Taizhou, Zhejiang 318020 (CN); LI, Yanan, Dorval, Québec H9P 1K2 (CA); ZHAO, Shiyong, Dorval, Québec H9P 1K2 (CA); XIAO, Shuyong, Dorval, Québec H9P 1K2 (CA); LIANG, Bin, Taizhou, Zhejiang 318020 (CN)
(74) Representative: Epping - Hermann - Fischer
(86) International application number: PCT/CN2022/086741
(87) International publication number: WO 2023/197231

(57) **Abstract**

Provided are a light valve and a switchable glass. The light valve comprises a first transparent electrode disposed on a first transparent substrate, a second transparent electrode arranged on a second transparent substrate, and a light control layer arranged between the first transparent electrode and the second transparent electrode, wherein a first protective layer is arranged between the first transparent electrode and the light control layer, and a second protective layer is arranged between the second transparent electrode and the light control layer; and the first protective layer and/or the second protective layer comprises a solid modified siloxane polymer, and comprises the following components in percentages by mass: 45-100 parts of the solid modified siloxane polymer, 0-3 parts of an antioxidant, 0-3 parts of an ultraviolet absorbent, 0-3 parts of an infrared absorbent, 0-3 parts of a light stabilizer, 0-3 parts of a heat stabilizer, and 0-40 parts of a liquid additive. The solution of the present invention can greatly improve the overall thermal stability and light stability of the light valve, and also obtain a higher interlayer adhesive force.

## Description

### FIELD

The present application belongs to the field of light valve technology, and relates to a light valve, a switchable glass, and an application of a modified siloxane oligomer in the light valve, and in particular to a light valve, a switchable glass, and an application of a modified siloxane oligomer in the light valve.

### BACKGROUND

Light valve is a device that can adjust the transmittance of light passing through itself, also known as a dimming film, which is a smart film. Conventional dimming films directly adhere the films to the glass, and then the voltage makes the dimming films appear penetrating and foggy, which realizes people's dual requirements for glass penetration and privacy protection. Even when the dimming film is opaque, the indoor lighting is still good, which is currently impossible for all curtains. The dimming film has an insulating and reflective effect on the heat energy of light, so as to make the room warm in winter and cool in summer. The dimming film is environmentally friendly and energy-saving. This product uses the optical properties of liquid crystal to realize the photoelectric function of the dimming film, and is currently widely used in Europe, the United States, Japan and other countries. The component formed by the dimming film after lamination is generally called switchable glass.

In order to better facilitate an application of the light valve, the conventional technology will set a resin protective layer above and below the light control layer to form a multi-layer structure. However, the protective layer in the current light valve still has room for improvement. Its poor effect causes the light valve to have more attenuation in the long-term thermal aging test, resulting in poor weather resistance and life.

Therefore, how to find a more suitable material to further improve the weather resistance and long-term stability of the light valve, so as to better expand the breadth and depth of light valve applications, has become one of urgent problems to be solved by many R&D companies and forward-looking researchers in this field.

### SUMMARY

In view of this, the technical problem to be solved by the present application is to provide an application of a modified siloxane oligomer in a light valve, a protective layer of a light valve, a light valve and a switchable glass. The modified siloxane oligomer according to the present application as a protective layer of a light valve can achieve better thermal stability, radiation resistance and stronger interlayer adhesion of the light valve.

The present application provides a light valve, wherein the light valve comprises a first transparent electrode arranged on a first transparent substrate, a second transparent electrode arranged on a second transparent substrate, and a light control layer arranged between the first transparent electrode and the second transparent electrode;
wherein:
a first protective layer is arranged between the first transparent electrode and the light control layer, and/or
a second protective layer is arranged between the second transparent electrode and the light control layer;
the first protective layer and/or the second protective layer comprises a solid modified siloxane polymer, comprising by weight percentage:
   45 to 100 parts by weight of solid modified siloxane polymer;
   0 to 3 parts by weight of antioxidant;
   0 to 3 parts by weight of ultraviolet absorber;
   0 to 3 parts by weight of infrared absorber;
   0 to 3 parts by weight of light stabilizer;
   0 to 3 parts by weight of heat stabilizer;
   0 to 40 parts by weight of liquid additive.

Preferably, the solid modified siloxane polymer is obtained by curing a modified siloxane oligomer; the curing method includes light curing and/or thermal curing.

Preferably, the modified siloxane oligomer has a structure shown in formula (I): 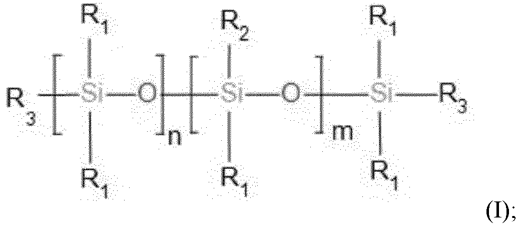
wherein, n and m are degrees of polymerization;
R₁ is independently selected from hydrogen, alkyl, alkoxy or aromatic group;
R₂ is selected from vinyl, propenyl, epoxy or Q-(CH₂)ₐ-;
R₃ is independently selected from hydrogen, hydroxyl, alkyl, alkoxy, vinyl, propenyl or Q-(CH₂)ₐ-;
in Q-(CH₂)ₐ-, Q is acryloyloxy or methacryloyloxy, a is a positive integer from 2 to 10.

Preferably, at least one of the side chain R₂ and the end cap R₃ of the modified siloxane oligomer contains a curable group;
the curable group includes at least one of vinyl, propylene, epoxy and Q-(CH₂)ₐ-;
in Q-(CH₂)ₐ-, Q is acryloyloxy or methacryloyloxy, a is a positive integer from 2 to 10.

Preferably, a mass content of the curable group is 0.1% to 20% of the modified siloxane oligomer.

Preferably, when R₃ is a non-curable group, n=1 to 100000, m=1 to 10000;
when R₃ is a curable group, n=1 to 100000, m=0 to 10000.

Preferably, a molecular weight Mn of the modified siloxane oligomer is 1000 to 100000.

Preferably, the modified siloxane oligomer has one or more of a chain structure, a network structure and a three-dimensional structure.

Preferably, a raw material for forming the first protective layer or the second protective layer comprises by weight percentage:
44 to 99.99 parts by weight of a modified siloxane oligomer;
0 to 3 parts by weight of an antioxidant;
0 to 3 parts by weight of an ultraviolet absorber;
0 to 3 parts by weight of an infrared absorber;
0 to 3 parts by weight of a light stabilizer;
0 to 3 parts by weight of a heat stabilizer;
0.01 to 1 parts by weight of an initiator;
0 to 40 parts by weight of liquid additive.

Preferably, an amount of the antioxidant is 0.01 to 3 parts by weight;
the antioxidant comprises one or more of epoxidized soybean oil, DTDTP and antioxidant 535.

Preferably, an amount of the ultraviolet absorber is 0.01 to 3 parts by weight;
the ultraviolet absorber comprises one or more of UV99, UV326, UV384 and UV1130.

Preferably, an amount of the infrared absorber is 0.01 to 3 parts by weight;
the infrared absorber comprises one or more of nano-indium oxide, nano-tungsten oxide and nano-tin oxide.

Preferably, an amount of the light stabilizer is 0.01 to 3 parts by weight;
the light stabilizer comprises one or more of light stabilizer UV144, light stabilizer UV249 and light stabilizer UV292.

Preferably, an amount of the heat stabilizer is 0.01 to 3 parts by weight;
the heat stabilizer comprises one or more of dibutyltin laurate, stannous 2-ethylhexanoate and phosphite ester.

Preferably, the initiator includes a photoinitiator;
the photoinitiator includes one or more of photoinitiator 819, photoinitiator 184, photoinitiator 1130, photoinitiator BDK, photoinitiator TPO and photoinitiator Irgacure 250.

Preferably, the initiator includes a thermal initiator;
the thermal initiator comprises one or more of thermal initiator BPO, thermal initiator TPB and thermal initiator AIBN.

Preferably, an amount of the liquid additive is 0.01 to 40 parts by weight;
the liquid additive comprises one or more of phthalates, trimellitates, terephthalates, epoxy esters, acrylic resins and methacrylic resins.

Preferably, a thickness of the first protective layer and/or the second protective layer is 1 to 10 microns.

Preferably, a base coating coated on the first electrode and/or the second electrode is comprised between the first transparent electrode and the first protective layer and/or between the second transparent electrode and the second protective layer;
a material of the base coating comprises one or more of epoxy resin, polyurethane, polyimide resin, polystyrene resin, acrylic resin, modified acrylic acid and silica gel.

Preferably, the light control layer is one of a suspended particle dimming layer, a polymer dispersed liquid crystal dimming layer and an electrochromic dimming layer.

Preferably, the first protective layer, the light control layer and the second protective layer are formed by layer-by-layer coating or multi-layer co-extrusion coating.

The present application provides a switchable glass, wherein the switchable glass comprises a first glass plate, a second glass plate; and a light valve according to any one of the above technical solutions arranged between the first glass plate and the second glass plate.

Preferably, a first interlayer is provided between the first glass plate and the light valve, and/or a second interlayer is provided between the second glass plate and the light valve.

The present application further provides an application of a modified siloxane oligomer in a light valve;
the modified siloxane oligomer has a structure shown in formula (I): 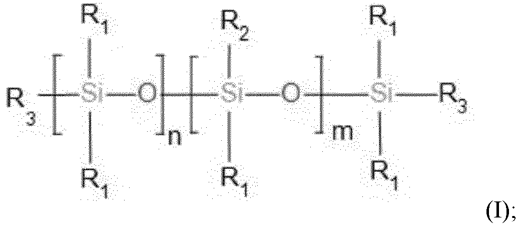
wherein, n and m are degrees of polymerization;
R₁ is independently selected from hydrogen, alkyl, alkoxy or aromatic group;
R₂ is selected from vinyl, propenyl, epoxy or Q-(CH₂)ₐ-;
R₃ is independently selected from hydrogen, hydroxyl, alkyl, alkoxy, vinyl, propenyl or Q-(CH₂)ₐ-;
in Q-(CH₂)ₐ-, Q is acryloyloxy or methacryloyloxy, a is a positive integer from 2 to 10.

The present application provides a light valve. Compared with the conventional technology, in order to solve the problems of the conventional light valve in terms of weather resistance and long-term stability caused by the poor effect of the protective layer of the conventional light valve, the present application designs a modified siloxane oligomer with a specific structure and creatively applies it to the materials of the protective layer of the light valve.

The present application uses the modified siloxane high polymer as the material of the protective layer adjacent to the light control layer, which greatly improves the overall thermal stability and light stability of the light valve, and obtains higher interlayer adhesion, effectively solving the problem of rapid attenuation of the conventional light valve in long-term thermal aging tests.

The technical solution of the protective layer containing modified siloxane high polymer according to the present application improves the weather resistance, product life and yield of the light valve. Moreover, the curing method of the modified siloxane high polymer is simple, so the light valve protective layer according to the present application can be simply realized by UV light curing technology or thermal curing technology. At the same time, the preparation method of the light valve can also adopt the method of layer-by-layer coating or multi-layer co-extrusion coating, which can achieve simple and stable preparation. The method is simple in process, strong in controllability, and more suitable for large-scale industrial production and promotion and application.

The experimental results show that the light valves prepared using the modified siloxane polymer protective layer according to the present application have a peeling force increased by 1 to 2N, and the samples prepared using the multi-layer co-extrusion coating method have a greater peeling force and better adhesion effect. In terms of radiation performance comparison, the light valves prepared using the modified siloxane polymer protective layer have a significant improvement. The difference in radiation performance mainly depends on the additive formula in the modified siloxane polymer. In terms of thermal aging, the light valves prepared using the modified siloxane polymer have a significant improvement. Specifically, the siloxane system and the light control layer system have good compatibility, and the barrier performance of the modified siloxane polymer itself is much stronger than other materials.

### BRIEF DESCRIPTION OF THE DRAWINGS

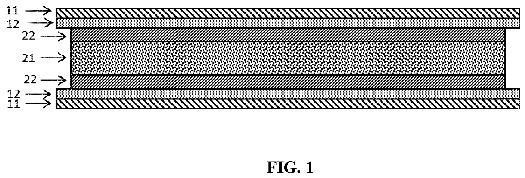

FIG. 1 is a simplified structural diagram of a light valve according to an embodiment of the present application.

### DETAILED DESCRIPTION OF EMBODIMENTS

In order to further understand the present application, preferred embodiments of the present application are described below in conjunction with examples, but it should be understood that these descriptions are only for further illustrating features and advantages of the present application, rather than limiting the claims of the present application.

The present application has no particular restrictions on the sources of all raw materials, and they can be purchased on the market or prepared according to conventional methods known to those skilled in the art.

The present application has no particular restrictions on purity of all raw materials. The present application preferably adopts analytically pure or conventional purity used in the field of preparation of modified siloxane oligomers.

The present application provides an application of a modified siloxane oligomer in a light valve.

The modified siloxane oligomer has a structure shown in formula (I): 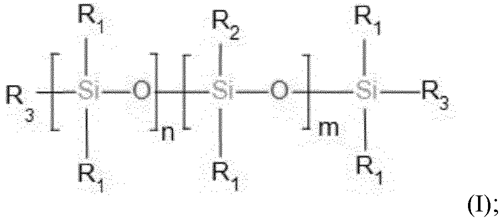
wherein, n and m are degrees of polymerization;
R₁ is independently selected from hydrogen, alkyl, alkoxy or aromatic group;
R₂ is selected from vinyl, propenyl, epoxy or Q-(CH₂)ₐ-;
R₃ is independently selected from hydrogen, hydroxyl, alkyl, alkoxy, vinyl, propenyl or Q-(CH₂)ₐ-;
in Q-(CH₂)ₐ-, Q is acryloyloxy or methacryloyloxy, a is a positive integer from 2 to 10.

The present application provides a light valve, wherein the light valve comprises a first transparent electrode arranged on a first transparent substrate, a second transparent electrode arranged on a second transparent substrate, and a light control layer arranged between the first transparent electrode and the second transparent electrode;
wherein:
a first protective layer is arranged between the first transparent electrode and the light control layer, and/or
a second protective layer is arranged between the second transparent electrode and the light control layer;
the first protective layer and/or the second protective layer comprises a solid modified siloxane polymer, comprising by weight percentage:
   45 to 100 parts by weight of solid modified siloxane polymer;
   0 to 3 parts by weight of antioxidant;
   0 to 3 parts by weight of ultraviolet absorber;
   0 to 3 parts by weight of infrared absorber;
   0 to 3 parts by weight of light stabilizer;
   0 to 3 parts by weight of heat stabilizer;
   0 to 40 parts by weight of liquid additive.

In an embodiment, the modified siloxane oligomer is preferably a curable modified siloxane oligomer.

In an embodiment, the curing method preferably includes UV light curing and/or thermal curing, and more preferably UV light curing and/or thermal curing.

In an embodiment, the modified siloxane oligomer has a structure shown in formula (I): 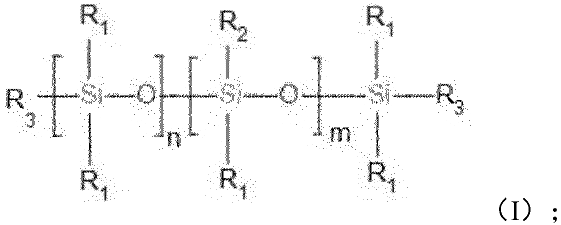
wherein, n and m are degrees of polymerization;
R₁ is independently selected from hydrogen, alkyl, alkoxy or aromatic group;
R₂ is selected from vinyl, propenyl, epoxy or Q-(CH₂)ₐ-;
R₃ is independently selected from hydrogen, hydroxyl, alkyl, alkoxy, vinyl, propenyl or Q-(CH₂)ₐ-;
in the Q-(CH₂)ₐ-, Q is acryloyloxy or methacryloyloxy, a is a positive integer from 2 to 10.

In an embodiment, at least one of the side chain R₂ and the end cap R₃ of the modified siloxane oligomer preferably contains a curable group.

Specifically, in an embodiment, the curable group preferably includes at least one of vinyl, propenyl, epoxy and Q-(CH₂)ₐ-, and more preferably vinyl, propenyl, epoxy or Q-(CH₂)ₐ-. In the Q-(CH₂)ₐ-, Q is acryloyloxy or methacryloyloxy, a is a positive integer from 2 to 10.

In an embodiment, a mass content of the curable group is preferably 0.1% to 20%, more preferably 4% to 16%, and more preferably 8% to 12% of the modified siloxane oligomer.

In an embodiment, a molecular weight Mn of the modified siloxane oligomer is preferably 1000 to 100000, more preferably 10000 to 80000, more preferably 20000 to 60000, and more preferably 30000 to 40000.

In an embodiment, the modified siloxane oligomer preferably has one or more of a chain structure, a network structure, and a three-dimensional structure, and more preferably has a chain structure, a network structure, or a three-dimensional structure.

In an embodiment, when R₃ is a non-curable group, preferably n=1 to 100000, more preferably n=10 to 80000, more preferably n=100 to 50000, more preferably n=1000 to 30000, more preferably n=5000 to 200001; preferably m=1 to 10000, more preferably m=10 to 8000, more preferably m=100 to 6000, more preferably m=500 to 5000, more preferably m=1000 to 3000.

In an embodiment, when R₃ is a curable group, preferably n=1 to 100000, more preferably n=10 to 80000, more preferably n=100 to 50000, more preferably n=1000 to 30000, more preferably n=5000 to 200001; preferably m=0 to 10000, more preferably m=1 to 8000, more preferably m=10 to 6000, more preferably m=50 to 5000, more preferably m=100 to 3000, more preferably m=500 to 2000.

In an embodiment, the modified siloxane oligomer is preferably cured to obtain a modified siloxane high polymer.

In an embodiment, the modified siloxane high polymer is preferably a modified siloxane high polymer protective layer for a light valve.

In an embodiment, the amount of the modified siloxane oligomer is 44 to 99.99 parts by weight, preferably 54 to 89 parts by weight, and more preferably 64 to 79 parts by weight.

In an embodiment, the amount of the antioxidant is 0 to 3 parts by weight, preferably 0.01 to 3 parts by weight, more preferably 0.1 to 2 parts by weight, and more preferably 0.5 to 1 part by weight.

In an embodiment, the amount of the ultraviolet absorber is 0 to 3 parts by weight, preferably 0.01 to 3 parts by weight, more preferably 0.1 to 2 parts by weight, and more preferably 0.5 to 1 part by weight.

In an embodiment, the amount of the infrared absorber is 0 to 3 parts by weight, preferably 0.01 to 3 parts by weight, more preferably 0.1 to 2 parts by weight, and more preferably 0.5 to 1 part by weight.

In an embodiment, the amount of the light stabilizer is 0 to 3 parts by weight, preferably 0.01 to 3 parts by weight, more preferably 0.1 to 2 parts by weight, and more preferably 0.5 to 1 part by weight.

In an embodiment, the amount of the heat stabilizer is 0 to 3 parts by weight, preferably 0.01 to 3 parts by weight, more preferably 0.1 to 2 parts by weight, more preferably 0.5 to 1 part by weight.

In an embodiment, the amount of the initiator is 0.01 to 1 part by weight, preferably 0.1 to 0.8 part by weight, more preferably 0.2 to 0.6 part by weight, more preferably 0.3 to 0.4 part by weight.

In an embodiment, the amount of the liquid additive is 0 to 40 parts by weight, preferably 0.01 to 30 parts by weight, more preferably 0.1 to 20 parts by weight, more preferably 1 to 10 parts by weight.

In an embodiment, the antioxidant preferably includes one or more of epoxidized soybean oil, DTDTP and antioxidant 535, more preferably the antioxidant is epoxidized soybean oil, DTDTP or antioxidant 535.

In an embodiment, the ultraviolet absorber preferably includes one or more of UV99, UV326, UV384 and UV1130, and more preferably the ultraviolet absorber is UV99, UV326, UV384 or UV1130.

In an embodiment, the infrared absorber preferably includes one or more of nano-indium oxide, nano-tungsten oxide and nano-tin oxide, and more preferably the infrared absorber is nano-indium oxide, nano-tungsten oxide or nano-tin oxide.

In an embodiment, the light stabilizer preferably includes one or more of light stabilizer UV144, light stabilizer UV249 and light stabilizer UV292, and more preferably the light stabilizer is light stabilizer UV144, light stabilizer UV249 or light stabilizer UV292.

In an embodiment, the heat stabilizer preferably includes one or more of dibutyltin laurate, stannous 2-ethylhexanoate and phosphite ester, and more preferably the heat stabilizer is dibutyltin laurate, stannous 2-ethylhexanoate or phosphite ester.

In an embodiment, the initiator preferably includes a photoinitiator and a thermal initiator.

In an embodiment, the photoinitiator preferably includes one or more of photoinitiator 819, photoinitiator 184, photoinitiator 1130, photoinitiator BDK, photoinitiator TPO and photoinitiator Irgacure 250, and more preferably the photoinitiator is photoinitiator 819, photoinitiator 184, photoinitiator 1130, photoinitiator BDK, photoinitiator TPO or photoinitiator Irgacure 250.

In an embodiment, the thermal initiator preferably includes one or more of thermal initiator BPO, thermal initiator TPB and thermal initiator AIBN, and more preferably the thermal initiator is thermal initiator BPO, thermal initiator TPB or thermal initiator AIBN.

In an embodiment, the liquid additive preferably includes one or more of phthalates, trimellitates, terephthalates, epoxy esters, acrylic resins and methacrylic resins, and more preferably the liquid additive is phthalates, trimellitates, terephthalates, epoxy esters, acrylic resins or methacrylic resins.

In an embodiment, the protective layer raw material is preferably cured by UV light and/or heat to obtain a modified siloxane high polymer protective layer, and more preferably the protective layer raw material is cured by UV light or heat to obtain a modified siloxane high polymer protective layer.

In an embodiment, the modified siloxane high polymer further includes one or more of antioxidant (0.1% to 3%), ultraviolet absorber (0.1% to 3%), infrared absorber (0.1% to 3%), light stabilizer (0.1% to 3%), heat stabilizer (0.1% to 3%), and the like, to improve the anti-ultraviolet performance of the light valve.

In an embodiment, a thickness of the first protective layer and/or the second protective layer is 1 to 10 microns. The thickness is preferably 1 to 10 microns, more preferably 3 to 8 microns, and more preferably 5 to 6 microns.

In an embodiment, a base coating coated on the first electrode and/or the second electrode is comprised between the first transparent electrode and the first protective layer and/or between the second transparent electrode and the second protective layer.

In an embodiment, a material of the base coating preferably includes one or more of epoxy resin, polyurethane, polyimide resin, polystyrene resin, acrylic resin, modified acrylic acid and silica gel, and more preferably the material of the base coating is epoxy resin, polyurethane, polyimide resin, polystyrene resin, acrylic resin, modified acrylic or silica gel.

In an embodiment, the transparent electrode preferably includes an ITO conductive layer, a FZO conductive layer, an IZO conductive layer, a GZO conductive layer, an AZO conductive layer, a PEDOT conductive layer, a nano-Ag wire conductive layer, a conductive graphene and a nano-Cu wire conductive layer.

In an embodiment, the transparent substrate preferably includes PET and/or glass, more preferably the transparent substrate is PET or glass.

In an embodiment, the light control layer is preferably one or more of a suspended particle dimming layer, a polymer dispersed liquid crystal dimming layer and an electrochromic dimming layer, more preferably the light control layer is a suspended particle dimming layer, a polymer dispersed liquid crystal dimming layer or an electrochromic dimming layer.

In an embodiment, the preparation method of the light valve preferably includes coating.

In an embodiment, the coating method preferably includes layer-by-layer coating or multi-layer co-extrusion coating. More preferably, the first protective layer, the light control layer and the second protective layer are preferably formed by multi-layer co-extrusion coating.

In the present application, in order to complete and refine the overall technical solution, better guarantee the performance of the modified siloxane oligomer, improve the stability and adhesion of the protective layer of the light valve, and further improve the comprehensive performance of the light valve, the above-mentioned modified siloxane oligomer may specifically have the following structures:

In the curable modified siloxane oligomer, the main chain is siloxane, and at least one of side chains or end caps contains a curable group.

Specifically, the content of the curable group is 0.1% to 20% of a total curable modified siloxane oligomer.

Specifically, the curable group is one or more of vinyl, propylene, acryloyloxy, methacryloyloxy, and epoxy groups.

Specifically, the molecular weight Mn of the curable modified siloxane oligomer is 1000 to 100,000.

Specifically, the curable modified siloxane oligomer may be a chain structure, a network structure, or a three-dimensional structure. More preferably, the curable modified siloxane oligomer has a chain structure.

The curable modified siloxane oligomer has a structure shown in formula (I): 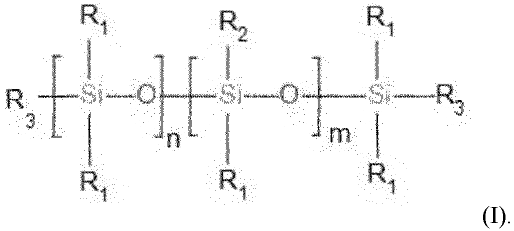
wherein, R₁ is one or more of hydrogen, alkyl, alkoxy, and aromatic groups;
R₂ is one or more of vinyl, propenyl, acryloyloxy, methacryloyloxy, and epoxy groups;
R₃ is one or two of hydrogen, hydroxyl, alkyl, alkoxy, vinyl, propenyl, acryloyloxy, and methacryloyloxy groups.

When R₃ is a non-curable group, n=1 to 100000, m=1 to 10000; when R₃ is a curable group, n=1 to 100000, m=0 to 10000.

The light valve according to an embodiment of the present application comprises a light control layer;
a protective layer composited on upper and lower surfaces of the light control layer;
a transparent electrode and a transparent substrate composited on the upper and lower surfaces of the protective layer;
the protective layer is a modified siloxane high polymer protective layer;
the modified siloxane high polymer protective layer includes the modified siloxane high polymer protective layer described in any one of the above technical solutions.

In an embodiment, the thickness of the protective layer is preferably 1 to 10 microns, more preferably 3 to 8 microns, and more preferably 5 to 6 microns.

In an embodiment, the light valve preferably comprises a base coating composited on the transparent electrode between the transparent electrode and the protective layer.

In an embodiment, a material of the base coating preferably includes one or more of epoxy resin, polyurethane, polyimide resin, polystyrene resin, acrylic resin, modified acrylic acid and silica gel, more preferably the material of the base coating is epoxy resin, polyurethane, polyimide resin, polystyrene resin, acrylic resin, modified acrylic acid or silica gel.

In an embodiment, the transparent electrode preferably includes an ITO conductive layer, a FZO conductive layer, an IZO conductive layer, a GZO conductive layer, an AZO conductive layer, a PEDOT conductive layer, a nano-Ag wire conductive layer, a conductive graphene and a nano-Cu wire conductive layer.

In an embodiment, the transparent substrate preferably includes PET and/or glass, more preferably the transparent substrate is PET or glass.

In an embodiment, the light control layer is preferably one or more of a suspended particle dimming layer, a polymer dispersed liquid crystal dimming layer and an electrochromic dimming layer, and more preferably the light control layer is a suspended particle dimming layer, a polymer dispersed liquid crystal dimming layer or an electrochromic dimming layer.

In an embodiment, the preparation method of the light valve preferably includes coating.

In an embodiment, the coating method preferably includes layer-by-layer coating or multi-layer co-extrusion coating.

Reference is made to FIG. 1, which is a schematic structural diagram of the light valve according to an embodiment of the present application. In FIG.1, 11 is ITO/PET or ITO/glass, 12 is a base coating (which may be contained or not), 22 is a protective layer, and 21 is a light control layer.

Specifically, the base coating is one of epoxy resin, polyurethane, polyimide resin, polystyrene resin, acrylic resin, modified acrylic acid, and silica gel.

Specifically, the protective layer is modified siloxane high polymer.

Specifically, the following additives may be added:
Ultraviolet absorber: one or more of UV99, UV326, UV384, UV1130.
Light stabilizer: one or more of UV144, UV249, and UV292.
Antioxidant: one or more of epoxidized soybean oil, DTDTP, and antioxidant 535.
Infrared absorber: one or more of nano-indium oxide, nano-tungsten oxide, and nano-tin oxide.
Heat stabilizer: one or more of dibutyltin laurate, stannous 2-ethylhexanoate, and phosphite ester.

The modified siloxane high polymer in the protective layer according to the present application is achieved by curing the modified siloxane oligomer through UV light curing or heat curing technology.

The present application provides a switchable glass, wherein the switchable glass comprises:
a first glass plate and a second glass plate;
and a light valve as described in any one of the above technical solutions arranged between the first glass plate and the second glass plate.

In an embodiment, a first interlayer is preferably arranged between the first glass plate and the light valve, and/or a second interlayer is arranged between the second glass plate and the light valve, more preferably a first interlayer is preferably arranged between the first glass plate and the light valve, and a second interlayer is arranged between the second glass plate and the light valve.

In an embodiment, there is no special restriction on the types of the first glass plate and the second glass plate, which can be conventional transparent glass for switchable glass well known to those skilled in the art, and can be ordinary glass such as inorganic glass, organic glass, or functional glass such as UV blocking glass, IR blocking glass, Low-E glass, tempered glass or antibacterial glass, or the like.

In an embodiment, there is no special restriction on the types of the first interlayer and the second interlayer, which can be conventional interlayers for switchable glass well known to those skilled in the art, and can be EVA film, TPU film, PVB film, or functional film, such as UV blocking EVA film, UV blocking TPU film, UV blocking PVB film, or the like.

In an embodiment, there is no special restriction on the method for manufacturing the switchable glass, which can be a conventional interlayer method for switchable glass in the art, such as laminating in a laminator, or laminating in an autoclave or laminating box/furnace, or the like.

The above technical solution of the present application provides a light valve and a switchable glass, and application of a modified siloxane oligomer in the light valve. The present application designs a modified siloxane oligomer with a specific structure, and applies it to the protective layer material of the light valve. The present application uses the modified siloxane high polymer as the material of the protective layer adjacent to the light control layer, which greatly improves the overall thermal stability and light stability of the light valve, and at the same time obtains higher interlayer adhesion, effectively solving a problem of faster attenuation of the conventional light valve in long-term thermal aging tests.

The technical solution of the protective layer containing modified siloxane high polymer according to the present application improves the weather resistance, product life and yield of the light valve. Moreover, the curing method of the modified siloxane high polymer is simple, thus the light valve protective layer according to the present application can be simply realized by UV light curing technology or thermal curing technology. At the same time, the preparation method of the light valve can also adopt the method of layer-by-layer coating or multi-layer co-extrusion coating, which can achieve simple and stable preparation. It is simple in process, strong in controllability, and is more suitable for large-scale industrial production and promotion and application.

The experimental results show that the light valves prepared using the modified siloxane polymer protective layer according to the present application have a peeling force increased by 1 to 2N, and the samples prepared using the multi-layer co-extrusion coating method have a greater peeling force and better adhesion effect. In terms of radiation performance comparison, the light valves prepared using the modified siloxane polymer protective layer have a significant improvement. The difference in radiation performance mainly depends on the additive formula in the modified siloxane polymer. In terms of thermal aging, the light valves prepared using the modified siloxane polymer have a significant improvement. Specifically, the siloxane system and the light control layer system have good compatibility, and the barrier performance of the modified siloxane polymer itself is much stronger than other materials.

In order to further illustrate the present application, the light valve and the switchable glass, and the application of the modified siloxane oligomer in the light valve according to the present application are described in detail in combination with the embodiments below. However, it should be understood that these embodiments are implemented on the premise of the technical solution of the present application. The detailed implementation methods and specific operation processes are given only to further illustrate the characteristics and advantages of the present application, rather than to limit the claims of the present application. The protection scope of the present application is not limited to following embodiments.

### Terms

In the present application, the following terms used have the meanings defined below.

Curing refers to the polymerization reaction of active groups on the side chains and/or end caps in the modified siloxane oligomer. That is, curing occurs under thermal catalysis or photocatalysis conditions, such as adding a photoinitiator to the protective layer raw material containing the modified siloxane oligomer to induce a polymerization reaction by UV light.

Curable group refers to active groups on the side chains and/or end caps in the modified siloxane oligomer that can participate in the polymerization reaction.

The three terms solid modified siloxane polymer, modified siloxane polymer, modified siloxane high polymer are equivalent. The two terms curable modified siloxane oligomer and modified siloxane oligomer are equivalent.

### Structure 1

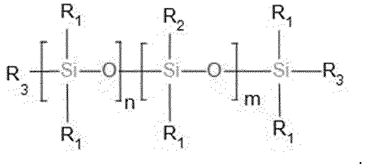

Structure 2 is a general formula of the curable modified siloxane oligomer A synthesized in the present application. 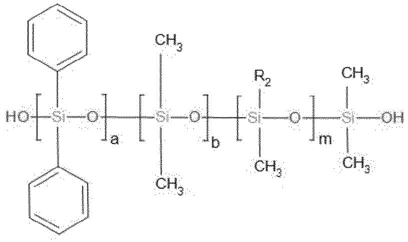 wherein, a+b=n, and R₂ is acryloyloxypropyl.

Structure 3 is a general formula of the curable modified siloxane oligomer B synthesized in the present application. 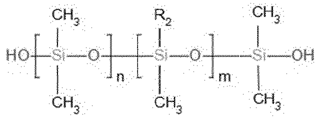 wherein, R₂ is an acryloyloxypropyl group.

In Example 15, a general formula of poly[dimethylsiloxane-co-(2-(3,4-epoxycyclohexyl)ethyl)methylsiloxane] is 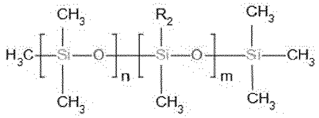 wherein, R₂ is 2-(3,4-epoxycyclohexyl)ethyl.

In Example 16, a general formula of divinyl-terminated poly(dimethylsiloxane-co-diphenylsiloxane) is 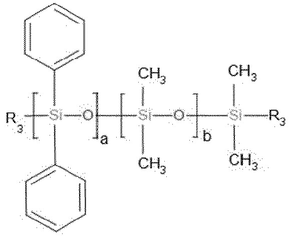 wherein, a+b=n, m=0, and R₃ is vinyl.

In Example 17, a general formula of vinyl-terminated poly(dimethylsiloxane) is: 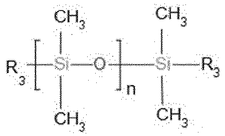 wherein, m=0, R₃ is vinyl.

### Example 1

### Synthesis method of curable modified siloxane oligomer A

500 g of hydroxyl-terminated dimethyl diphenyl polysiloxane and 1000 ml of toluene were added to a 2000 ml three-necked bottle. A water separator was connected to a condenser on one side of the three-necked bottle, a mechanical stirrer was added in the middle, and a thermometer was placed on the other side of the three-necked bottle. The solution in the bottle was heated to reflux for 30 minutes. When a small amount of water appeared in the water separator, a catalyst stannous octoate solution (1.3 g dissolved in 100 ml of toluene) was added. Then a mixture of 30 g of hydrolyzed acryloyloxypropyl trimethoxysilane and 18 g of hydrolyzed epoxypropyl trimethylsiloxane was added dropwise for about 5 minutes. The condensation reaction took about 5 hours, after which 30 ml of trimethylmethoxysilane was immediately added as a terminator for the reaction. The termination of the reaction lasted for 2 hours and then the reaction quickly cooled to room temperature.

The reaction solution was poured into a 2000 ml round-bottom flask and subjected to rotary evaporation at 70 degrees Celsius and 10 mbar for 2 hours to finally obtain a curable modified siloxane oligomer A, namely, sample 1, with a yield of 530 grams.

### Example 2

### Synthesis method of curable modified siloxane oligomer B

520 g of hydroxyl-terminated dimethyl polysiloxane and 1000 ml of toluene were added to a 2000 ml three-necked bottle. A water separator was connected to a condenser on one side of the three-necked bottle, a mechanical stirrer was added in the middle, and a thermometer was placed on the other side of the three-necked bottle. The solution in the bottle was heated to reflux for 30 minutes. When a small amount of water appeared in the water separator, a catalyst stannous octoate solution (1.3 g dissolved in 100 ml of toluene) was added. Then a mixture of 30 g of hydrolyzed acryloyloxypropyl trimethoxysilane and 18 g of hydrolyzed epoxypropyl trimethylsiloxane was added dropwise for about 5 minutes. The condensation reaction took about 5 hours, after which 30 ml of trimethylmethoxysilane was immediately added as a terminator for the reaction. The termination of the reaction lasted for 2 hours and then the reaction quickly cooled to room temperature.

The reaction solution was poured into a 2000 ml round-bottom flask and subjected to rotary evaporation at 70 degrees Celsius and 10 mbar for 2 hours to finally obtain a curable modified siloxane oligomer B, i.e., sample 2, with a yield of 550g.

### Example 3

### Preparation of modified siloxane oligomer ink 1#

0.1g UV99, 0.1g UV144, 0.02g photoinitiator 819, 9.78g curable modified siloxane oligomer A, and 100g ethanol were added to a 500ml round-bottom flask, stirred well for 30min, and then placed in a rotary evaporator, in which the water bath temperature was 60 degrees Celsius, the speed was 60rpm, and the vacuum degree was adjusted to less than 10mbar, to perform rotary evaporation for 1h, to obtain a modified siloxane oligomer ink 1# containing UV absorber UV99.

### Example 4

### Preparation of modified siloxane oligomer ink 2#

The method was the same as Example 3 except that UV99 was replaced by UV326.

### Example 5

### Preparation of modified siloxane oligomer ink 3#

The method was the same as Example 3 except that UV99 was replaced by UV384.

### Example 6

### Preparation of modified siloxane oligomer ink 4#

The method was the same as Example 3 except that UV99 was replaced by UV1130.

### Example 7

### Preparation of modified siloxane oligomer ink 5#

The method was the same as Example 3 except that UV144 was replaced by UV249.

### Example 8

### Preparation of modified siloxane oligomer ink 6#

The method was the same as Example 3 except that UV144 was replaced by UV292.

### Example 9

### Preparation of modified siloxane oligomer ink 7#

The method was the same as Example 3 except that the addition of 0.1g UV99 was replaced by the addition of 0.3g UV99; the addition of 9.78g curable modified siloxane oligomer A was replaced by the addition of 9.58g curable modified siloxane oligomer A.

### Example 10

### Preparation of modified siloxane oligomer ink 8#

The method was the same as Example 3 except that the addition of 0.1g UV99 was replaced by the addition of 0.01g UV326; the addition of 9.78g curable modified siloxane oligomer A was replaced by the addition of 9.97g curable modified siloxane oligomer A.

### Example 11

### Preparation of modified siloxane oligomer ink 9#

The method was the same as Example 3 except that 0.1g light stabilizer UV144 was replaced by 0.1g antioxidant DTDTP.

### Example 12

### Preparation of modified siloxane oligomer ink 10#

The method was the same as Example 3 except that 0.1g light stabilizer UV144 was replaced with 0.1g antioxidant 535.

### Example 13

### Preparation of modified siloxane oligomer ink 11#

The method was the same as Example 3 except that 0.1g light stabilizer UV144 was replaced with 0.3g antioxidant epoxidized soybean oil, and the addition of 9.88g curable modified siloxane oligomer A was replaced with the addition of 9.68g curable modified siloxane oligomer A.

### Example 14

### Preparation of modified siloxane oligomer ink 12#

The method was the same as Example 3 except that the curable modified siloxane oligomer A was replaced with the curable modified siloxane oligomer B.

### Example 15

### Preparation of modified siloxane oligomer ink 13#

The method was the same as Example 3 except that the curable modified siloxane oligomer A was replaced by poly[dimethylsiloxane-co-(2-(3,4-epoxycyclohexyl)ethyl)methylsiloxane], and the addition of photoinitiator 819 was replaced by the addition of photoinitiator Irgacure 250.

### Example 16

### Preparation of modified siloxane oligomer ink 14#

The method was the same as Example 3 except that the curable modified siloxane oligomer A was replaced by vinyl-terminated poly(dimethylsiloxane), and the addition of photoinitiator 819 was replaced by the addition of thermal initiator BPO.

### Example 17

### Preparation of modified siloxane oligomer ink 15#

The method was the same as Example 3 except that the curable modified siloxane oligomer A was replaced with divinyl-terminated poly(dimethylsiloxane-co-diphenylsiloxane), and the addition of photoinitiator 819 was replaced with the addition of thermal initiator BPO.

### Example 18

### Preparation of light valve sample 1-1 by layer-by-layer coating

The ITO/PET containing base coating was placed on a blade coating platform and was fixed to the platform by vacuuming. 1g of the modified siloxane oligomer ink 1 in Example 3 was poured evenly on one side of the platform. The doctor blade was set to be in a thickness of 10µm and a speed of 2cm/s. The machine was turned on. The modified siloxane oligomer ink was bladed evenly to the surface of the base coating. The sample was placed under a UV lamp for curing with a curing intensity of 300W/m² for a curing time of 5s to obtain a lower substrate. The above steps were repeated to obtain an upper substrate. The lower substrate was taken, and the light control layer ink was applied on the lower substrate by blade coating. The doctor blade was set to be in a thickness of 60µm and a speed of 2cm/s. The sample was cured under a UV lamp with a curing intensity of 2000W/m² for a curing time of 15s. After the curing was completed, the upper substrate was attached to the lower substrate, and they were compounded by rolling to obtain the sample.

According to the method of Example 18, samples 1-2 to 1-12 can be obtained by replacing the modified siloxane oligomer ink 1 in Example 3 by the modified siloxane oligomer inks 2 to 12 in Examples 4 to 14.

### Example 19

### Preparation of light valve sample 2-1 by multi-layer co-extrusion coating

The ITO/PET containing base coating was placed on a blade coating platform and was fixed to the platform by vacuuming. 50g of the modified siloxane oligomer ink 1 in Example 3 was added to a multi-layer co-extrusion coating die feeding tank A, and 50g of the light control layer ink was added to a feeding tank B. The platform moving speed was set to 1.3cm/s; the pressure of feeding tank A was set to 0.4MPa and the pressure of feeding tank B was set to 0.3MPa. After the liquid coating was obtained, the ITO/PET containing the base coating on the other side of the sample was gently covered on the liquid coating by rolling, and the sample was cured under a UV lamp with a curing intensity of 2000W/m² for a curing time of 15s to obtain the sample.

According to the method of Example 19, samples 2-2 to 2-12 can be obtained by replacing the modified siloxane oligomer ink 1 in Example 3 by the modified siloxane oligomer inks 2 to 12 in Examples 4 to 14.

### Example 20

### Preparation of light valves 1-13 by layer-by-layer coating

The method was the same as Example 18 except that the modified siloxane oligomer ink 1 in Example 3 was replaced by the modified siloxane oligomer ink 13 in Example 15. The sample was cured under a UV lamp with a curing intensity of 300W/m² for a curing time of 5s, and placed in a 60°C oven for a curing time of 5min.

According to the method of Example 20, samples 1-14 to 1-15 can be obtained by replacing the modified siloxane oligomer ink 1 in Example 3 by the modified siloxane oligomer inks 14 to 15 in Examples 16 to 17.

### Example 21

### Preparation of light valve samples 2-13 by multi-layer co-extrusion coating

The method was the same as Example 19 except that the modified siloxane oligomer ink 1 in Example 3 was replaced by the modified siloxane oligomer ink 13 in Example 15. The sample was cured under a UV lamp with a curing intensity of 2000W/m² for a curing time of 15s, and placed in a 60°C oven for a curing time of 5min.

According to the method of Example 21, samples 2-14 to 2-15 can be obtained by replacing the modified siloxane oligomer ink 1 in Example 3 by the modified siloxane oligomer inks 14 to 15 in Examples 16 to 17.

### Comparative Example 1

The ITO/PET containing a base coating was placed on a blade coating platform and was fixed to the platform by vacuuming. 1g of methacrylate resin, the material of the first protective layer, was poured evenly on one side of the platform. The doctor blade was set to be in a thickness of 5µm and a speed of 2cm/s. The machine was turned on. The viscous protective layer raw material methacrylate resin was evenly bladed to the surface of the substrate by the doctor blade, and was cured under a UV lamp with a curing intensity of 300W/m² for a curing time of 5s. Then 1g of acrylate, the material of the second protective layer, was poured evenly on one side of the platform. The doctor blade thickness was set to 10µm and the doctor blade speed was set to 2cm/s. The machine was turned on. The acrylate was evenly bladed to the surface of the first protective layer by the doctor blade, and the sample was cured under a UV lamp with a curing intensity of 300W/m² for a curing time of 5s to obtain a lower substrate. The above steps were repeated to obtain an upper substrate. The lower substrate was taken, and the light control layer ink was applied on the lower substrate by blade coating. The doctor blade thickness was set to 60µm and the doctor blade speed was set to 2cm/s. The sample was cured under a UV lamp with a curing strength of 2000W/m² for a curing time of 15s. After the curing was completed, the upper substrate was attached to the lower substrate, and they were compounded by rolling to obtain Comparative Example 1.

### Comparative Example 2

The method was the same as Comparative Example 1 except that the second protective layer material acrylate was replaced by epoxy resin.

### Measurement of the peeling force of the light valve sample

A peeling strength tester was used, in which a movable clamp clamps the upper ITO/PET transparent electrode of the examples or the comparative examples, and the fixed clamp clamps the lower transparent electrode ITO/PET. The machine was run to obtain the force required for the movable clamp to peel the sample at a preset speed. The width of the sample to be tested was 10cm, so the unit was N/10cm.

### Radiation aging measurement of the laminated glass sample

The light valve samples of the above examples and comparative examples were laminated to make laminated glass samples. The aging test was carried out using a medium-pressure mercury lamp radiation aging instrument, and the time required for the sample color difference ΔE>5% was recorded.

### Thermal aging measurement of the laminated glass sample

The light valve samples of the above examples and comparative examples were laminated to make laminated glass samples. The aging test was carried out using a 100°C oven, and the sample data of 1000h was recorded.

Reference is made to Table 1, which shows the performance data of the samples prepared in the examples of the present application and the comparative examples.

**Table 1**

| Samples | Peeling force N/10cm | Mercury lamp aging time (h) | Initial performance | Thermal aging 1000h performance |
|---|---|---|---|---|
| Comparative Example 1 | 3.7 | 168 | 1.1-60.2 | 2.5-45.5 |
| Comparative Example 2 | 3.0 | 168 | 1.2-60.9 | 2.6-45.7 |
| 1-1 | 5.1 | 336 | 1.0-60.9 | 2.0-59.8 |
| 1-2 | 5.0 | 336 | 1.0-59.9 | 1.9-58.8 |
| 1-3 | 5.1 | 336 | 1.1-60.7 | 2.1-58.9 |
| 1-4 | 5.1 | 312 | 1.1-61.2 | 2.1-60.2 |
| 1-5 | 5.2 | 312 | 1.1-60.8 | 2.1-60.1 |
| 1-6 | 4.9 | 312 | 1.1-60.6 | 2.1-59.9 |
| 1-7 | 4.9 | 432 | 0.9-61.6 | 1.7-60.1 |
| 1-8 | 4.9 | 240 | 1.1-61.2 | 2.0-60.5 |
| 1-9 | 5.2 | 288 | 1.0-62.0 | 1.9-59.6 |
| 1-10 | 5.0 | 288 | 1.1-62.2 | 2.2-61.5 |
| 1-11 | 5.0 | 264 | 1.1-61.1 | 2.1-60.3 |
| 1-12 | 5.0 | 264 | 1.1-61.5 | 2.1-60.0 |
| 1-13 | 5.1 | 336 | 1.0-61.4 | 2.1-60.1 |
| 1-14 | 4.7 | 336 | 1.0-62.1 | 2.1-59.8 |
| 1-15 | 4.6 | 336 | 1.0-60.3 | 1.9-58.8 |
| 2-1 | 5.4 | 336 | 1.0-61.9 | 1.9-60.6 |
| 2-2 | 5.3 | 336 | 1.0-62.1 | 1.9-60.2 |
| 2-3 | 5.3 | 336 | 1.0-59.9 | 1.7-60.2 |
| 2-4 | 5.5 | 312 | 1.0-59.9 | 1.7-60.3 |
| 2-5 | 5.7 | 312 | 1.1-60.1 | 1.9-58.6 |
| 2-6 | 5.4 | 312 | 1.1-60.0 | 1.9-58.5 |
| 2-7 | 5.5 | 432 | 1.1-62.1 | 2.0-60.0 |
| 2-8 | 5.5 | 240 | 1.1-62.9 | 1.9-60.3 |
| 2-9 | 5.7 | 288 | 1.1-61.6 | 1.9-60.2 |
| 2-10 | 5.6 | 288 | 1.0-60.1 | 1.8-60.1 |
| 2-11 | 5.7 | 264 | 1.0-61.4 | 1.8-60.3 |
| 2-12 | 5.5 | 264 | 0.9-60.0 | 1.7-58.9 |
| 2-13 | 5.2 | 336 | 1.1-61.2 | 2.0-59.6 |
| 2-14 | 5.1 | 336 | 1.2-62.1 | 2.2-60.5 |
| 2-15 | 5.1 | 336 | 1.1-62.2 | 2.1-60.8 |

From the data in Table 1, the peeling force of the light valve samples prepared using the modified silicone polymer protective layer is improved by 1-2N. Among others, the samples using the multi-layer co-extrusion coating solution shows greater peeling force and better adhesion effect. In terms of irradiation performance comparison, the light valve samples prepared using the modified silicone polymer protective layer have a significant improvement as compared with the comparative examples. The difference in irradiation performance mainly depends on the additive formula in the modified silicone. In terms of thermal aging, the light valves prepared using the modified siloxane polymer have a significant improvement as compared with the comparative examples. Specifically, the siloxane system and the light control layer system have better compatibility, and the barrier properties of the modified siloxane polymer itself are much stronger than other materials.

### Liquid additive examples

The liquid additive includes one or more of phthalate esters, trimellitate esters, terephthalate esters, epoxy esters, and methacrylic resin.

Octyl phthalate, isodecyl phthalate, butyl phthalate, octyl terephthalate, trioctyl trimellitate, triisodecyl trimellitate, polylauryl methacrylate, polyhexyl methacrylate can be used in the examples.

### Example 22

### Preparation of modified siloxane oligomer ink a

2g of liquid additive octyl phthalate, 0.02g of photoinitiator 819, 7.98g of curable modified siloxane oligomer A, and 100g of ethanol were added to a 500ml round-bottom flask, then stirred thoroughly for 30 minutes. The mixture was placed in a rotary evaporator, in which the water bath temperature was 60 degrees Celsius, the rotation speed was 60 rpm, the vacuum degree was adjusted to about 10 mbar, and subjected to rotary evaporation process for 1 hour to obtain a modified silicone oligomer ink a containing UV absorber UV99.

### Example 23

### Preparation of modified siloxane oligomer ink b

The method was the same as Example 22 except that octyl phthalate was replaced by isodecyl phthalate.

### Example 24

### Preparation of modified siloxane oligomer ink c

The method was the same as Example 22 except that octyl phthalate was replaced by butyl phthalate.

### Example 25

### Preparation of modified siloxane oligomer ink d

The method was the same as Example 22 except that octyl phthalate was replaced by octyl terephthalate.

### Example 26

### Preparation of modified siloxane oligomer ink e

The method was the same as Example 22 except that octyl phthalate was replaced by trioctyl trimellitate.

### Example 27

### Preparation of modified siloxane oligomer ink f

The method was the same as Example 22 except that octyl phthalate was replaced by triisodecyl trimellitate.

### Example 28

### Preparation of modified siloxane oligomer ink g

The method was the same as Example 22 except that octyl phthalate was replaced by polylauryl methacrylate.

### Example 29

### Preparation of modified siloxane oligomer ink h

The method was the same as Example 22 except that octyl phthalate was replaced by polyhexyl methacrylate.

### Example 30

### Preparation of modified siloxane oligomer ink i

The method was the same as Example 22 except that 2g of octyl phthalate was replaced by 3g of octyl phthalate, and 7.88g of curable modified silicone oligomer A was replaced by 6.98g curable modified siloxane oligomer A.

### Example 31

### Preparation of modified siloxane oligomer ink j

0.02g of photoinitiator 819, 9.98g of curable modified siloxane oligomer A, and 100g of ethanol were added to a 500ml round-bottom flask, and stirred thoroughly for 30 minutes. The mixture was placed in a rotary evaporator, in which the water bath temperature was 60 degrees Celsius, the speed was 60 rpm, and the vacuum degree was adjusted to about 10 mbar, and subjected to rotary evaporation treatment for 1 hour to obtain the modified siloxane oligomer ink j.

The modified siloxane oligomer inks a-j prepared in Examples 22 to 31 of the present application were used to prepare light valves. The specific method was the same as that in Example 18 and Example 19, wherein 1-* means layer-by-layer coating, and 2-* means multi-layer co-extrusion coating.

Reference is made to Table 2, which shows the performance data of the samples prepared in the modified siloxane oligomer inks a-j in Examples 22 to 31 of the present application and the Comparative Examples 1 and 2.

**Table 2**

| Sample | Peeling force N/10cm | Mercury lamp aging time (h) | Initial performance | Thermal aging 1000h performance |
|---|---|---|---|---|
| Comparative Example 1 | 3.7 | 168 | 1.1-60.2 | 2.5-45.5 |
| Comparative Example 2 | 3.0 | 168 | 1.2-60.9 | 2.6-45.7 |
| 1-a | 4.8 | 216 | 1.0-61.1 | 2.0-61.1 |
| 1-b | 4.9 | 216 | 1.1-60.9 | 2.1-61.2 |
| 1-c | 4.8 | 240 | 1.1-60.2 | 2.2-60.9 |
| 1-d | 4.8 | 240 | 1.1-60.1 | 2.2-61.1 |
| 1-e | 4.9 | 216 | 1.1-60.3 | 2.1-61.5 |
| 1-f | 4.9 | 240 | 1.1-60.6 | 2.2-60.5 |
| 1-g | 4.8 | 216 | 1.1-60.2 | 2.2-61.2 |
| 1-h | 4.9 | 240 | 1.0-60.2 | 2.2-61.5 |
| 1-i | 4.9 | 240 | 1.2-62.0 | 2.3-62.6 |
| 1-j | 5.3 | 216 | 1.2-62.2 | 2.2-62.5 |
| 2-a | 5.2 | 216 | 0.9-61.1 | 1.8-61.7 |
| 2-b | 5.2 | 216 | 0.9-61.1 | 1.8-61.3 |
| 2-c | 5.3 | 240 | 0.9-60.1 | 1.7-60.6 |
| 2-d | 5.2 | 240 | 1.0-59.6 | 1.9-61.5 |
| 2-e | 5.3 | 216 | 1.0-60.1 | 1.9-62.1 |
| 2-f | 5.3 | 240 | 0.9-59.9 | 1.9-59.8 |
| 2-g | 5.2 | 216 | 0.9-60.1 | 1.8-61.2 |
| 2-h | 5.2 | 240 | 0.9-60.4 | 1.8-60.9 |
| 2-i | 5.3 | 240 | 0.9-59.7 | 1.8-60.4 |
| 2-j | 5.7 | 216 | 1.2-62.1 | 2.2-63.1 |

From the data in Table 2, it can be seen that the samples using the modified silicone polymer protective layer containing liquid additives have the same conclusion as the samples in Table 1 in terms of peeling force, which is significantly improved compared to the comparative samples. In terms of irradiation performance and thermal aging performance, the samples of the examples have a significant improvement compared with the comparative examples.

A light valve, a switchable glass, and an application of a modified siloxane oligomer in light valves according to the present application have been introduced in detail above. Specific examples are used here to illustrate the principles and embodiments of the present application. The above examples are only intended to help understand the method and the core idea of the present application, including the best mode, and enable any person skilled in the art to practice the present application, including manufacturing and using any device or system, and implementing any combined method. It should be pointed out that for those skilled in the art, several improvements and modifications can be made to the present application without departing from the principle of the present application, and these improvements and modifications also fall within the protection scope of the claims of the present application. The scope of patent protection of the present application is defined by the claims, and may include other embodiments that occur to those skilled in the art. These other embodiments shall also be included within the scope of the claims in a case that they have structural elements that do not differ from the literal expressions of the claims, or in a case that they include equivalent structural elements with insubstantial differences from the literal expressions of the claims.

## Claims

1. A light valve, wherein the light valve comprises a first transparent electrode disposed on a first transparent substrate, a second transparent electrode disposed on a second transparent substrate, and a light control layer disposed between the first transparent electrode and the second transparent electrode;
wherein:
a first protective layer is disposed between the first transparent electrode and the light control layer, and/or
a second protective layer is disposed between the second transparent electrode and the light control layer;
the first protective layer and/or the second protective layer comprises solid modified siloxane polymer, comprising by weight percentage:
45 to 100 parts by weight of solid modified siloxane polymer;
0 to 3 parts by weight of antioxidant;
0 to 3 parts by weight of ultraviolet absorber;
0 to 3 parts by weight of infrared absorber;
0 to 3 parts by weight of light stabilizer;
0 to 3 parts by weight of heat stabilizer;
0 to 40 parts by weight of liquid additive.

2. The light valve according to claim 1, wherein the solid modified siloxane polymer is obtained by curing a modified siloxane oligomer;
the curing method comprises light curing and/or thermal curing.

3. The light valve according to claim 2, wherein the modified siloxane oligomer has a structure shown in formula (I): 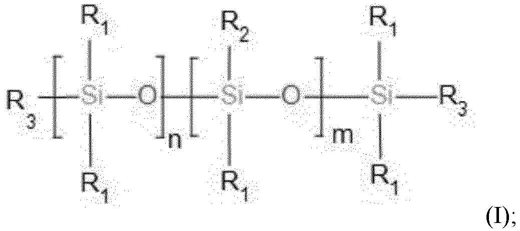
wherein, n and m are degrees of polymerization;
R₁ is independently selected from hydrogen, alkyl, alkoxy or aromatic group;
R₂ is selected from vinyl, propenyl, epoxy or Q-(CH₂)ₐ-;
R₃ is independently selected from hydrogen, hydroxyl, alkyl, alkoxy, vinyl, propenyl or Q-(CH₂)ₐ-;
in Q-(CH₂)ₐ-, Q is acryloyloxy or methacryloyloxy, a is a positive integer from 2 to 10.

4. The light valve according to claim 3, wherein at least one of the side chain R₂ and the end cap R₃ of the modified siloxane oligomer contains a curable group;
the curable group comprises at least one of vinyl, propylene, epoxy and Q-(CH₂)ₐ-;
in Q-(CH₂)ₐ-, Q is acryloyloxy or methacryloyloxy, a is a positive integer from 2 to 10.

5. The light valve according to claim 4, wherein a mass content of the curable group is 0.1% to 20% of the modified siloxane oligomer.

6. The light valve according to claim 3, wherein when R₃ is a non-curable group, n=1 to 100000, m=1 to 10000;
when R₃ is a curable group, n=1 to 100000, m=0 to 10000.

7. The light valve according to claim 2, wherein a molecular weight Mn of the modified siloxane oligomer is 1000 to 100000.

8. The light valve according to claim 2, wherein the modified siloxane oligomer has one or more of a chain structure, a network structure and a three-dimensional structure.

9. The light valve according to claim 1, wherein raw materials for forming the first protective layer or the second protective layer comprise by weight percentage:
44 to 99.99 parts by weight of modified siloxane oligomer;
0 to 3 parts by weight of antioxidant;
0 to 3 parts by weight of ultraviolet absorber;
0 to 3 parts by weight of infrared absorber;
0 to 3 parts by weight of light stabilizer;
0 to 3 parts by weight of heat stabilizer;
0.01 to 1 parts by weight of initiator;
0 to 40 parts by weight of liquid additive.

10. The light valve according to claim 9, wherein an amount of the antioxidant is 0.01 to 3 parts by weight;
the antioxidant comprises one or more of epoxidized soybean oil, DTDTP and antioxidant 535.

11. The light valve according to claim 9, wherein an amount of the ultraviolet absorber is 0.01 to 3 parts by weight;
the ultraviolet absorber comprises one or more of UV99, UV326, UV384 and UV1130.

12. The light valve according to claim 9, wherein an amount of the infrared absorber is 0.01 to 3 parts by weight;
the infrared absorber comprises one or more of nano-indium oxide, nano-tungsten oxide and nano-tin oxide.

13. The light valve according to claim 9, wherein an amount of the light stabilizer is 0.01 to 3 parts by weight;
the light stabilizer comprises one or more of light stabilizer UV144, light stabilizer UV249 and light stabilizer UV292.

14. The light valve according to claim 9, wherein an amount of the heat stabilizer is 0.01 to 3 parts by weight;
the heat stabilizer comprises one or more of dibutyltin laurate, stannous 2-ethylhexanoate and phosphite ester.

15. The light valve according to claim 9, wherein the initiator comprises a photoinitiator; the photoinitiator comprises one or more of photoinitiator 819, photoinitiator 184, photoinitiator 1130, photoinitiator BDK, photoinitiator TPO and photoinitiator Irgacure 250.

16. The light valve according to claim 9, wherein the initiator comprises a thermal initiator;
the thermal initiator comprises one or more of thermal initiator BPO, thermal initiator TPB and thermal initiator AIBN.

17. The light valve according to claim 9, wherein an amount of the liquid additive is 0.01 to 40 parts by weight;
the liquid additive comprises one or more of phthalates, trimellitates, terephthalates, epoxy esters, acrylic resins and methacrylic resins.

18. The light valve according to claim 1, wherein a thickness of the first protective layer and/or the second protective layer is 1 to 10 microns.

19. The light valve according to claim 1, wherein a base coating coated on the first electrode and/or the second electrode is comprised between the first transparent electrode and the first protective layer and/or between the second transparent electrode and the second protective layer;
wherein a material of the base coating comprises one or more of epoxy resin, polyurethane, polyimide resin, polystyrene resin, acrylic resin, modified acrylic acid and silica gel.

20. The light valve according to claim 1, wherein the light control layer is one of a suspended particle dimming layer, a polymer dispersed liquid crystal dimming layer and an electrochromic dimming layer.

21. The light valve according to claim 1, wherein the first protective layer, the light control layer and the second protective layer are formed by layer-by-layer coating or multi-layer co-extrusion coating.

22. A switchable glass, wherein the switchable glass comprises a first glass plate and a second glass plate; and the light valve according to any one of claims 1 to 21 arranged between the first glass plate and the second glass plate.

23. The switchable glass according to claim 22, wherein a first interlayer is provided between the first glass plate and the light valve, and/or
a second interlayer is provided between the second glass plate and the light valve.

24. An application of a modified siloxane oligomer in a light valve, wherein the modified siloxane oligomer has a structure shown in formula (I): 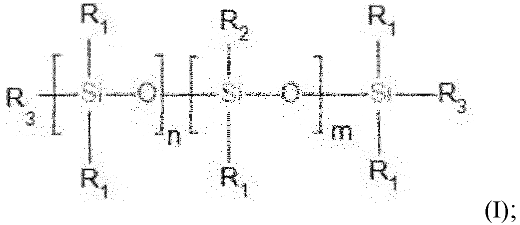
wherein, n and m are degrees of polymerization;
R₁ is independently selected from hydrogen, alkyl, alkoxy or aromatic group;
R₂ is selected from vinyl, propenyl, epoxy or Q-(CH₂)ₐ-;
R₃ is independently selected from hydrogen, hydroxyl, alkyl, alkoxy, vinyl, propenyl or Q-(CH₂)ₐ-;
in Q-(CH₂)ₐ-, Q is acryloyloxy or methacryloyloxy, a is a positive integer from 2 to 10.
